# EUROPEAN PATENT APPLICATION

(11) **EP 2 045 977 A1**
(43) Date of publication of application: **08.04.2009**
(21) Application number: 07830930.9
(22) Date of filing: 31.10.2007
(51) Int. Cl.: H04L 12/56, H04Q 7/38

(54) **COMMUNICATION METHOD, COMMUNICATION SYSTEM, HOME AGENT, MOBILE NODE, AND COMMUNICATION NODE**

(30) Priority: 31.10.2006 JP 2006296965
(71) Applicant: Panasonic Corporation, Kadoma-shi Osaka 571-8501 (JP)
(72) Inventor: ASO, Keigo c/o Panasonic Corporation IPROC, IP, Panasonic Tower,1-61,Shiromi 2-chome,Chuo-ku,Osaka-shi,Osaka 540-6207 (JP)
(74) Representative: Pautex Schneider, Nicole Véronique
(86) International application number: PCT/JP2007/071196
(87) International publication number: WO 2008/053914

(57) **Abstract**

A new technique is disclosed, by which it is possible to prevent the occurrence of unnecessary traffic from a mobile node when a path is switched over by path selecting policy of a home agent itself or a correspondent node itself. According to this technique, in a communication system where a mobile node 10 registers a plurality of care-of addresses at a home agent 2, which controls own home address, and the home agent transfers a packet destined to the home address to one of said plurality of care-of addresses, the home agent switches over the care-of address of transfer destination and notifies, to the mobile node, care-of address switching information containing the care-of address before the switching by a packet destined to the care-of address after the switching, and the mobile node transmits a binding update message for maintaining binding information relating to the care-of address after the switching to the home agent.

## Description

### TECHNICAL FIELD

The present invention relates to a communication method, a communication system, a home agent, a mobile node, and a communication node, in which a mobile node registers a plurality of care-of addresses at a home agent, which controls its own home address, and the home agent transfers a packet destined to the home address to one of the plurality of care-of addresses.
Also, the present invention relates to a communication method, a communication system, a home agent, a mobile node, and a communication node, in which a mobile node registers a plurality of care-of addresses to a correspondent node, and the correspondent node transfers a packet to one of the plurality of care-of addresses.

### BACKGROUND ART

A mobile node (MN) using mobile IP (Internet Protocol) registers a care-of address (CoA), which is a destination address of the MN after handover from home, at a home agent (HA), controlling its own home address (HoA), and requests the transfer of the packet destined to HoA. If MN can register by simultaneously associating a plurality of CoAs to a single HoA, MN, which has a plurality of interfaces, can instantaneously switch over CoA in use, depending on the conditions of the interface by registering CoA assigned to each of the interfaces. The Non-Patent Document 1 as given below discloses a method, by which MN registers a plurality of CoAs at HA by associating with a single HoA.

On the other hand, when HA receives the registration of a plurality of CoAs from MN, and if information to judge as to which of the CoAs should be used as transfer destination of the packet destined to HoA of MN (i.e. path selecting policy) can be acquired from MN, it is possible to select CoA based on the intention of MN. The Non-Patent Document 2 as given below discloses a technique, by which MN registers flow information as the path selecting policy to HA. Also, when HA receives the registration of a plurality of CoAs, CoA of transfer destination can be switched over not only by the path selecting policy as notified from MN but also by the path selecting policy of HA itself. In this case, HA can select CoA of the packet to be transmitted to MN by taking the conditions of communication with the other node into account, and more effective switching of the path can be achieved.
Non-Patent Document 1: R. Wakikawa, T. Ernst, K. Nagami: "Multiple Care-of Addresses Registration"; draft-ietf-monami6-multiplecoa-00.txt; June 2006.
Non-Patent Document 2: H. Soliman, N. Montavont, N. Fikouras, K. Kuladinithi: "Flow Bindings in Mobile Ipv6"; draft-soliman-monami6-flow-binding-01.txt.; June 2006.

However, when the path is switched over by the path selecting policy of HA itself or the correspondent node (CN) itself, MN transmits a binding update message for maintaining binding information relating to CoA, which has been used before the switching. Also, when the lifetime of the binding information still remains, the packet is transmitted by using this CoA. In this respect, when the switching of the path by HA or CN is performed by taking the conditions of communication with the other node into account, for instance, the above action by MN is unfavorable and undesirable to HA. As a result, unnecessary traffic occurs from MN.

### DISCLOSURE OF THE INVENTION

To overcome the above problems in the prior art, it is an object of the present invention to provide a communication method, a communication system, a home agent, a mobile node, and a communication node, by which it is possible to prevent the occurrence of unnecessary traffic from the mobile node when the path is switched over by path selecting policy of the home agent itself or of the correspondent node itself.

To attain the above object, the present invention provides a communication method, in which a mobile node registers a plurality of care-of addresses at a home agent which controls home address of said mobile node, and said home agent transfers a packet destined to said home address to one of said plurality of care-of addresses, wherein said method comprises:
a step where said home agent switches over said care-of address of transfer destination and notifies care-of address switching information containing the care-of address before the switching to said mobile node by a packet destined to the care-of address after the switching; and
a step where said mobile node transmits a binding update message to said home agent to maintain binding information relating to the care-of address after the switching.

Also, the present invention provides a communication system, in which a mobile node registers a plurality of care-of addresses at a home agent which controls home address of said mobile node, and said home agent transfers a packet destined to said home address to one of said plurality of care-of addresses, wherein said system comprises:
means for switching over said care-of address of transfer destination by said home agent, and notifying care-of address switching information containing the care-of address before the switching to said mobile node by a packet destined to the care-of address after the switching to said mobile node by said home agent; and
means for transmitting a binding update message relating to the care-of address after the switching to maintain binding information to said home agent by said mobile node.

Further, to attain the above object, the present invention provides a home agent communication system, in which a mobile node registers a plurality of care-of addresses at a home agent which controls home address of said mobile node, and said home agent transfers a packet destined to said home address to one of said plurality of care-of addresses, wherein said home agent comprises:
means for switching over said care-of address of transfer destination, and notifying care-of address switching information containing the care-of address after the switching; and
wherein said mobile node transmits a binding update message for maintaining binding information relating to the care-of address after said switching to said home agent itself.

Also, to attain the above object, the present invention provides a mobile node in a communication system, in which a mobile node registers a plurality of care-of addresses at a home agent which controls home address of said mobile node, and said home agent transfers a packet destined to said home address to one of said plurality of care-of addresses, wherein said mobile node comprises:
means for, when said home agent switches over said care-of address of transfer destination and notifies care-of address switching information containing the care-of address before the switching to said mobile node itself, transmitting a packet destined to the care-of address after the switching, and transmitting a binding update message for maintaining binding information relating to the care-of address after said switching to said home agent.

With the arrangement as described above, the occurrence of unnecessary traffic from the mobile node can be prevented when the path is switched over by the path selecting policy of the home agent itself.

Further, to attain the above object, the present invention provides a communication method, in which a mobile node registers a plurality of care-of addresses at a correspondent node, and said correspondent node transfers a packet to one of said plurality of care-of addresses, wherein said method comprises:
a step where said correspondent node switches over said care-of address of transfer destination and notifies care-of address switching information containing the care-of address before the switching of said mobile node by a packet destined to the care-of address after the switching; and
a step where said mobile node transmits a binding update message for maintaining binding information relating to the care-of address after said switching to said correspondent node.

Also, to attain the above object, the present invention provides a communication system, in which a mobile node registers a plurality of care-of addresses at a correspondent node, and said correspondent node transfers a packet to one of said plurality of care-of addresses, wherein said system comprises:
means for switching over said care-of address of transfer destination by said correspondent node, and notifying care-of address switching information containing the care-of address before the switching of said mobile node by a packet destined to the care-of address after the switching to said mobile node by said correspondent node; and
means, by which said mobile node transmits a binding update message for maintaining binding information relating to the care-of address after said switching to said correspondent node by said mobile node.

Further, to attain the above object, the present invention provides a communication node in a communication system where a mobile node registers a plurality of care-of addresses at a correspondent node, and said correspondent node transfers a packet to one of said plurality of care-of addresses, wherein said correspondent node comprises:
means for switching over said care-off address of transfer destination and for notifying care-of address switching information containing the care-of address before the switching to said mobile node by a packet destined to the care-of address after the switching; and
wherein said mobile node is so arranged that a binding update message for maintaining binding information relating to the care-of address after said switching is transmitted to said mobile node itself.

Also, to attain the above object, the present invention provides a mobile node in a communication system where a mobile node registers a plurality of care-of addresses at a correspondent node and said correspondent node transfers a packet to one of said plurality of care-of addresses, wherein said mobile node comprises:
means for, when said correspondent node switches over said care-of address of transfer destination and notifies the care-of address switching information containing the care-of address before the switching to said mobile node by a packet destined to the care-of address after the switching, transmitting a binding update message for maintaining binding information relating to the care-of address after said switching to said correspondent node.

With the arrangement as described above, it is possible to prevent the occurrence of unnecessary traffic from the mobile node when the path is switched over by the path selecting policy of the correspondent node itself.

According to the present invention, it is possible to prevent the occurrence of unnecessary traffic from the mobile node when the path is switched over by the path selecting policy of the home agent itself or of the correspondent node itself.

### BRIEF DESCRIPTION OF THE DRAWINGS

Fig. 1 is a block diagram to show an arrangement of a network in a first embodiment of the invention;
Fig. 2 is a block diagram to show an arrangement of a mobile node shown in Fig. 1;
Fig. 3 is a drawing to explain an example of arrangement of a packet including CoA switching information;
Fig. 4 is a drawing to show an arrangement of another example of the packet including CoA switching information;
Fig. 5 is a block diagram to show an example of arrangement of the home agent shown in Fig. 1;
Fig. 6 is a drawing to show an example of communication sequence in the first embodiment;
Fig. 7 is a drawing to show another example of communication sequence in the first embodiment;
Fig. 8 is a drawing to show still another example of communication sequence in the first embodiment;
Fig. 9 is a flowchart to explain processing of the home agent shown in Fig. 1;
Fig. 10 is a flowchart to explain processing of the mobile node shown in Fig. 1;
Fig. 11 is a block diagram to show an arrangement of a network in a second embodiment of the invention;
Fig. 12 is a block diagram to show an example of arrangement of the mobile node shown in Fig. 11;
Fig. 13 is a block diagram to show an example of arrangement of CN in Fig. 11;
Fig. 14 is a flowchart to explain processing of CN in Fig. 11;
Fig. 15 is a drawing to explain an example of communication sequence in the second embodiment;
Fig. 16 is a drawing to explain another example of communication sequence in the second embodiment;
Fig. 17 is a drawing to explain still another example of communication sequence in the second embodiment;
Fig. 18 is a drawing to explain an example of BA message and BRR message including CoA switching information; and
Fig. 19 is a drawing to show an example of communication sequence in case complete information is notified to a specific CoA in the first embodiment.

### BEST MODE FOR CARRYING OUT THE INVENTION

Description will be given below on embodiments of the present invention by referring to the attached drawings.

### [The first embodiment (notification by HA)]

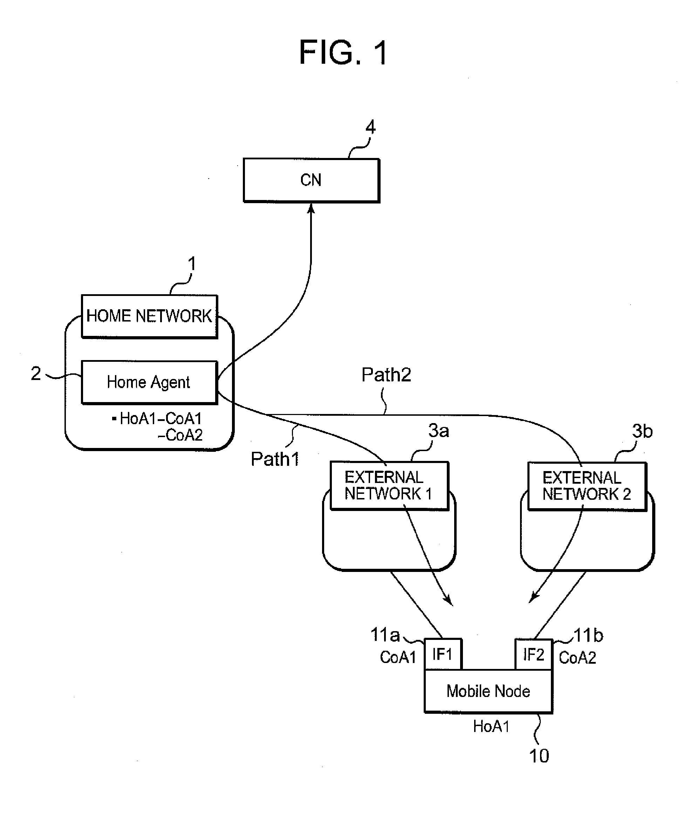

Fig. 1 is a drawing to show an arrangement of a network in a first embodiment of the invention. HA (Home Agent) 2 is present in a home network 1 and controls a home address HoA1 of MN 10. MN 10 has two interfaces 11a (IF1) and 11b (IF2). IF1 is connected to an external network 3a (external network 1), and it has CoA1 as an address to be used in the external network 3a. IF2 is connected to an external network 3b (external network 2) and has CoA2 as an address to be used in the external network 3b. CN 4 is a correspondent node of MN 10.
There are paths, i.e. Path1 when CoA1 is used and Path2 when CoA2 is used as communication paths between MN 10 and CN 4. Path1 and Path2 pass through HA2 in the first embodiment.

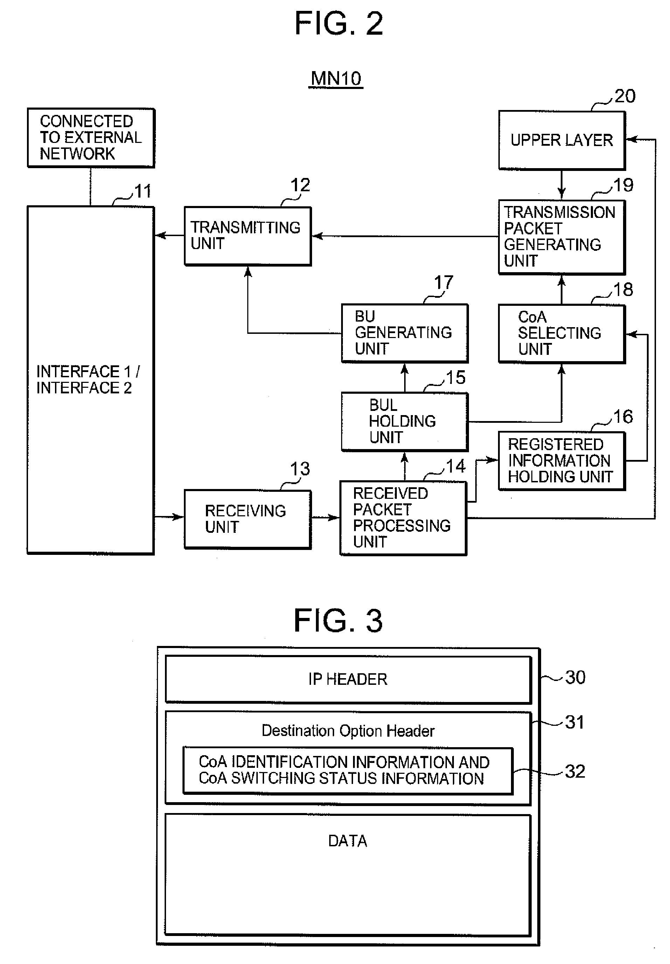

Fig. 2 is a block diagram to show an example of arrangement of MN 10 in the first embodiment of the invention. MN 10 comprises interfaces 11 (IF1 and IF2 shown in Fig. 1), a transmitting unit 12, a receiving unit 13, a received packet processing unit 14, a BUL (Binding Update List) holding unit 15, a registered flow information holding unit 16, a BU generating unit 17, a CoA selecting unit 18, a transmission packet generating unit 19, and an upper layer 20. The interfaces 11 are connected to the external networks 3a and 3b as shown in Fig. 1, to the transmitting unit 12 and to the receiving unit 13. The received packet processing unit 14 performs processing relating to a packet received via the receiving unit 13 and checks as to whether CoA switching information is contained or not in a header portion of the packet. In case CoA switching information is contained, an instruction is given to the BUL holding unit 15 to hold a value indicated by the information at the corresponding BUL entry. The CoA switching information contains information to indicate a status relating to a transfer destination address before the switching when the transfer destination address is switched over by HA2.

Fig. 3 shows an example of arrangement of a data packet 30, which contains CoA switching information as designated by HA2. CoA switching information 32 is arranged in a destination option header 31. Information contained in the CoA transfer information 32 is a combination of CoA identifying information (such as Binding Unique Identification number (BID)) and information to indicate status of CoA (CoA switching status information). The CoA switching status information is divided to the following three categories:
- Temporary
- Complete BC (Binding Cache)
- Complete Non-BC
The Temporary information indicates that the switching of CoA has been temporarily carried out. The Complete BC information indicates (hereinafter, may be referred as "Complete information") indicates that the switching of CoA has been permanently performed, and not temporarily. Further, it indicates that the binding cache relating to CoA before the switching is maintained. The Complete Non-BC information indicates that the switching of CoA has been performed permanently and not temporarily, but it also indicates that the binding cache relating to CoA before the switching is not maintained.

CoA switching information may be contained in a BA (Binding Acknowledgement) message, which HA transmits as a response to a BU (Binding Update) message from MN or in a BRR (Binding Refresh Request) message. In this case, it may be contained as a value of status field of BA message or as a value of status field in Binding Unique Identifier sub-option to be added to BA message and BRR message. Further, it may be contained in Flow Identification option for notifying flow information. These messages can be transmitted before or after the occurrence of the switching of CoA. In case the BA message is transmitted only as a response to the BU message, the information to be notified indicates that the switching of all transfer destinations performed by HA thereafter relates to the statuses of CoA switching information as described above. In this case, MN 10 judges whether it is appropriate or not to select a transmission source address of itself or to transmit the BU message based on CoA switching status information contained in BA message received before the switching when the transfer destination is switched over by HA.

On the other hand, when the temporary information is received, MN 10 recognizes that data packet can be transmitted using CoA before the switching and that it is possible to transmit BU (Binding Update) to maintain the binding information. When the Complete BC information is received, MN 10 recognizes that the data packet using CoA before the switching cannot be transmitted but BU for maintaining the binding information can be transmitted. When the Complete Non-BC information is received, MN recognizes that the transmission of the data packet using CoA before the switching is not allowed, and also that the transmission of BU for maintaining the binding information is not allowed.

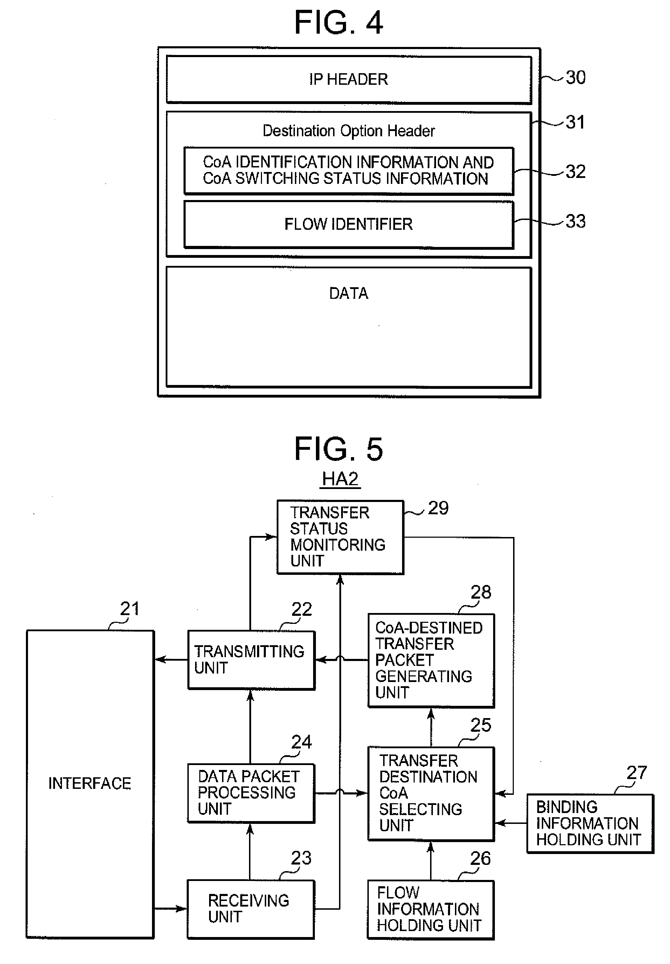

Fig. 4 shows an example of arrangement of a data packet, where a flow identifier 33 is contained in addition to CoA switching information of Fig. 3 as CoA switching information. When the flow identifier 33 is contained as CoA switching information, it is indicated that CoA switching information is effective for the flow designated by the flow identifier 33. In this respect, when CoA switching information including the flow identifier is contained in the received packet, the received packet processing unit 14 gives an instruction that a value indicated by this information should be maintained in the corresponding registered flow information entry.

Turning back to Fig. 2, the BUL holding unit 15 receives an instruction from the received packet processing unit 14 and holds the delivered CoA switching information within the BUL entry of the corresponding CoA. In case there is no corresponding entry, an entry is newly generated and the information is maintained in it. When the lifetime of the binding information entry in holding is near its end, an instruction is given to the BU generating unit 17 that BU should be transmitted again to the registration destination of the entry. When the instruction of the received packet processing unit 14 is received, the registered flow information holding unit 16 holds the delivered CoA switching information within the corresponding registered flow information entry. When there is no corresponding entry, an entry is newly generated and maintained. When an instruction is received from the BUL holding unit 15, the BU generating unit 17 generates a BU message, which contains the delivered binding information and gives an instruction that a BU message containing the delivered binding information should be generated and it should be transmitted to the transmitting unit 12.

Upon receipt of the instruction from the transmission packet generating unit 19, the CoA selecting unit 18 selects CoA, which should be specified as the source address of the packet to be transmitted. The CoA selecting unit 18 refers to the information held by the BUL holding unit 15 and checks whether BUL is present or not, which corresponds to the destination address of the packet to be transmitted. In case there is no corresponding BUL entry, CoA of the entry where Complete BC information or Complete Non-BC information is not addressed is selected from among the CoAs, which are registered at HA. Then, by using the selected CoA, a notification is given to the transmission packet generating unit 19 that an encapsulated packet should be generated by using the selected CoA.

When transmitting a response packet to the packet transferred from HA2, the CoA selecting unit 18 refers to the information, which is held by the BUL holding unit 15. In case Complete information is added to the BUL entry corresponding to the destination address of the received packet, the source address of the packet to be transmitted is switched over to CoA as used by HA2 (CoA, to which the Complete information is added) even when the CoA used for packet transmission before is a CoA different from the CoA used by HA2. In case Complete information is not added to the BUL, which corresponds to the destination address of the packet transferred from HA2, the CoA selecting unit 18 judges that the packet can be transmitted by using CoA other than the CoA used by HA. As a result, it can be so arranged that, when the packet is received, in which the CoA after the switching is set, MN is prohibited from transmitting the packet by continuously using the CoA, which has been used before the switching by HA, and it can be judged that the packet should be transmitted by using the same CoA as the CoA used by HA when the packet is transmitted thereafter.

For instance, HA2 adds Complete information destined to CoA2 into the BA message or the BRR message to be transmitted to MN 10, and transmits it to MN 10. Upon receipt of these messages, the received packet processing unit 14 gives an instruction to the BUL holding unit 15 that this Complete information should be held at the BUL entry of CoA2. When the destination address of the packet transferred from HA2 is CoA2 and Complete information is held at the BUL entry of CoA2, the CoA selecting unit 18 switches over the source address of the packet to be transmitted to CoA2 even when CoA, which has been used by MN 10 before it, is other than CoA2 (CoA1). In the case that the Complete information is not added to BUL, which corresponds to the CoA switched over by HA, the CoA selecting unit 18 judges that the packet can be transmitted by using a CoA other than the CoA, which has been used by HA.

The transmission packet generating unit 19 generates a packet for sending the transmission data delivered from an upper layer 20 to the destination node. The transmission packet generating unit 19 gives an instruction to the CoA selecting unit 18 that a CoA to be used as the source address of the transmission packet should be selected. When the information notified from the CoA selecting unit 18 gives an instruction for encapsulation, a packet is generated, which is encapsulated by a header, which has the address of HA2 as the destination address and the notified CoA as the source address. The upper layer 20 contains a transport layer or an application layer, which is present at an upper position than IP layer.

Fig. 5 is a block diagram to show an example of arrangement of HA2 in the first embodiment of the invention. HA2 comprises an interface 21, a transmitting unit 22, a receiving unit 23, a data packet processing unit 24, a transfer destination CoA selecting unit 25, a flow information holding unit 26, a binding information holding unit 27, a CoA-destined transfer packet generating unit 28, and a transfer status monitoring unit 29. The data packet processing unit 24 performs processing relating to the data packet received via the interface 21 and the receiving unit 23. When this packet is a packet destined to HoA of MN 10 under its control, an instruction is given to deliver the packet to the transfer destination CoA selecting unit 25 and to select CoA, which should become transfer destination.

Upon receipt of the instruction from the data packet processing unit 24, the transfer destination CoA selecting unit 25 selects CoA to be used as the destination address of the external header, which is added to the data packet to be transferred to MN 10. When the transfer destination CoA selecting unit 25 judges that a CoA different from the CoA, which has been used so far, should be selected and the transfer destination should be switched over, the CoA switching information as described above is included, depending on the status of CoA after the switching. The transfer destination CoA selecting unit 25 adds this CoA switching information as a destination option header of the external header. In synchronization with the switching of the transfer destination by HA2 as described above, the transfer destination CoA selecting unit 25 notifies Complete information to a specific CoA to MN 10 (before the switching of the transfer destination actually takes place) as an information to request the switching of interface to be used to MN 10.

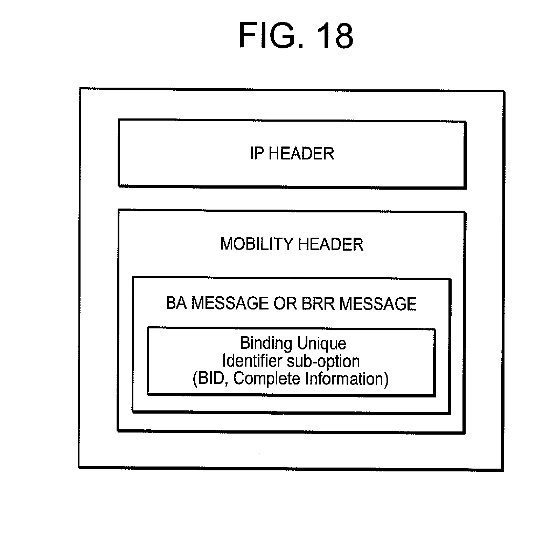

As the message to notify CoA switching information, a BA (Binding Acknowledgement) message or a BRR (Binding Refresh Request) message may be used as the message to notify CoA switching information as described above. In this case, CoA switching information may contain a value of status field of the BA message or a value of status field in the Binding Unique Identifier sub-option to be added to the BA message and the BRR message. Further, it may be contained in the flow identification option to notify the flow information. Fig. 18 shows an example of arrangement of the BA message and the BRR message including CoA switching information to be designated by HA2. The Complete information is contained in the Binding Unique Identifier sub-option (BID; to be used as CoA identification information). It may be contained in an option to notify the flow information (Flow Identification option).

The flow information holding unit 26 plays a role for holding the flow information. It may be so designed that the binding information holding unit 27 holds the flow information.

The reason for judging the switching of CoA may be as follows: In case the packet transfer to MN 10 and the packet transfer to the other MN may give influence on each other (e.g. in case another MN is present in the same link as MN 10 or in case it is present in the same network (domain network)), and when the transfer packets of these two pass through the same transfer route, judgment is made to switch over the transfer destination of MN 10, which has a plurality of transfer destinations, for the purpose of preventing the influence on the quality of communication. In particular, when it is wanted to avoid the influence by the packet transmitted from MN 10, it is possible to instruct the switching of the source address to be used by MN by notifying to MN that it is not a temporary transfer (i.e. Complete-BC). Further, in case it is no more necessary to maintain the binding information relating to the CoA before the switching because the switching of the transfer destination is permanent, it is possible to prevent that all packets to be transmitted from MN 10 are transmitted via the path before the switching by notifying Complete Non-BC, which notifies that the BU transmitted from MN 10 is not received to maintain the binding information. On the other hand, in case Complete information is notified in advance to a specific CoA, it is used in case where the same CoA as the CoA selected by HA2 itself is also used for MN 10.

The binding information holding unit 27 holds binding information, which contains CoA information as notified from MN 10. Upon receipt of an instruction from the transfer destination CoA selecting unit 25, the CoA-destined transfer packet generating unit 28 generates an encapsulated packet by using the delivered CoA, and the packet is delivered to the transmitting unit 22 to transmit it. The transfer status monitoring unit 29 collects information relating to the packet transferred to MN 10 under the control of HA2, and provides useful information, which can be used when the transfer destination CoA selecting unit 25 selects CoA.

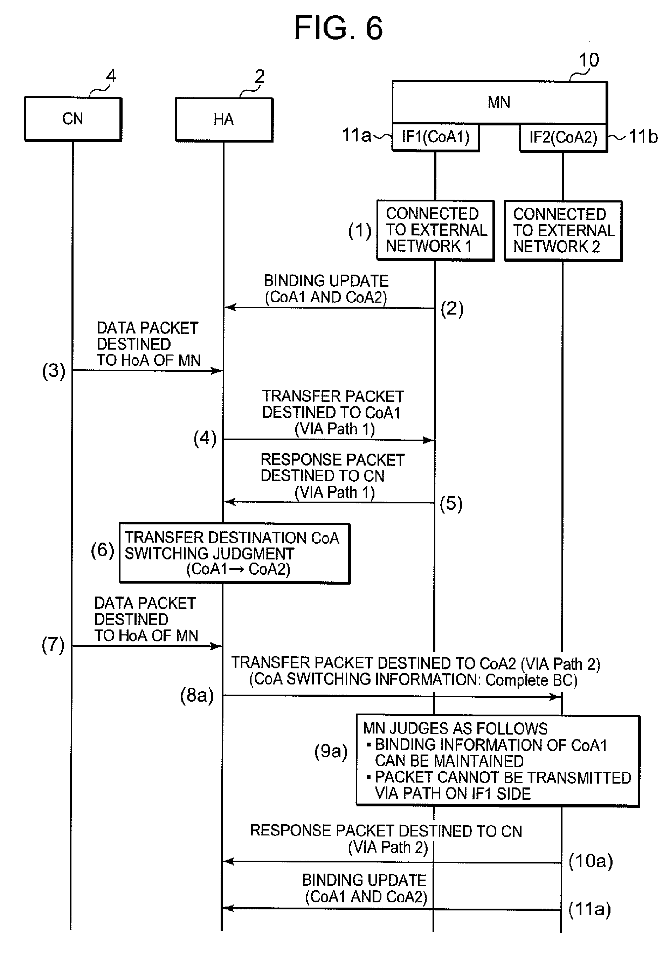

Next, referring to Fig. 6, Fig. 7 and Fig. 8, description will be given on communication sequence in the first embodiment. Fig. 6 shows communication sequence when HA2 transmits Complete BC information. First,
(1) It is assumed that MN 10 is connected to the external network 3a (external network 1) via the interface 11a among two interfaces 11a (IF1) and 11b (IF2) (Path1 using CoAl). To the interfaces 11a and 11b, CoA1 and CoA2 are assigned respectively.
(2) MN 10 transmits a Binding Update message to HA2 for the purpose of maintaining binding information relating to CoA1 and CoA2.
(3) When CN 4 transmits a packet destined to HoA of MN 10 to HA2,
(4) HA2 receives this packet and transmits it as a transfer packet to CoA1 of MN 10 via the path1, and
(5) MN 10 receives this packet and transmits it to the Path1 as a response packet destined to CN.

(6) HA2 judges whether CoA of transfer destination should be switched over, depending on the path selecting policy of its own. It is assumed here that the transfer destination CoA of MN 10 has been switched over from CoA1 to CoA2.
(7) When CN 4 transmits a packet destined to HoA of MN 10 to HA2,
(8a) HA2 receives this packet and transmits it as a transfer packet destined to CoA2 of MN 10 via Path2, and transmits Complete BC information as CoA switching information.
(9a) Based on this Complete BC information, MN 10 can maintain the binding information of CoA1 before the switching, but it judges that the packet cannot be transmitted via the interface 11a (IF1).
(10a) MN 10 receives the packet from HA2 and transmits it as a response packet destined to CN via Path2, and
(11a) MN 10 transmits a Binding Update message to HA2 so that the binding information relating to both of CoA1 and CoA2 can be maintained.

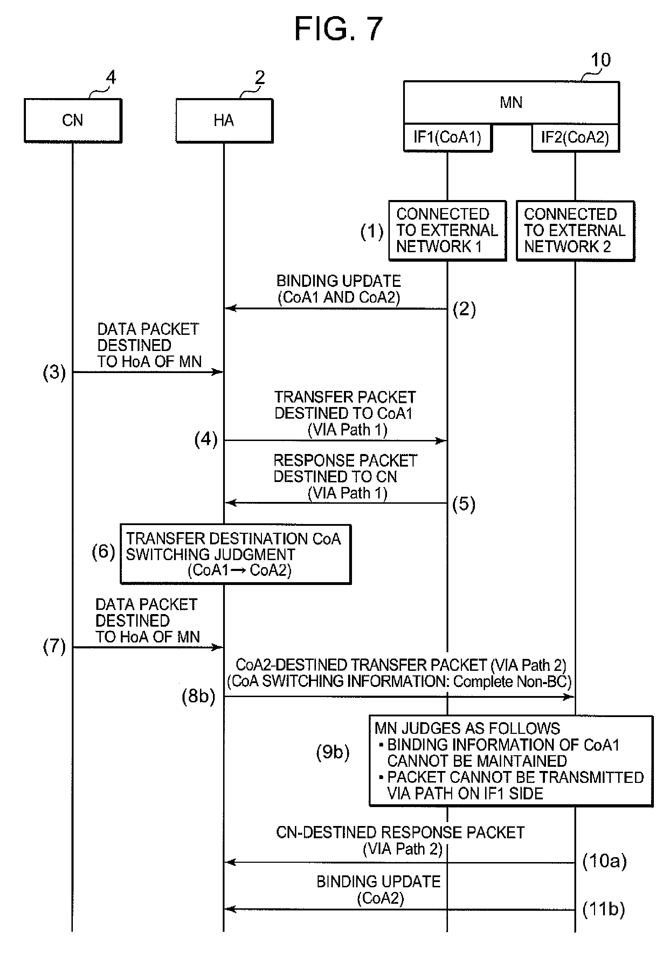

Fig. 7 shows communication sequence when HA2 transmits Complete Non-BC information. Because the sequences (1) - (7) are the same as those shown in Fig. 6, detailed description is not given here, and description will be given below on the subsequent sequences.
(8b) HA2 receives the packet from CN 4 and transmits it as a transfer packet destined to CoA2 of MN 10 via Path2. Also, Complete Non-BC information is transmitted as CoA switching information.
(9b) By this Complete Non-BC information, MN 10 judges that the binding information of CoA1 before the switching cannot be maintained and that the packet cannot be transmitted via the interface (IF1).
(10a) MN 10 receives the packet from HA2 and transmits it as a response packet destined to CN via Path2, and
(11b) MN 10 transmits only the binding update message in order to maintain the binding information relating to CoA2 after the switching.

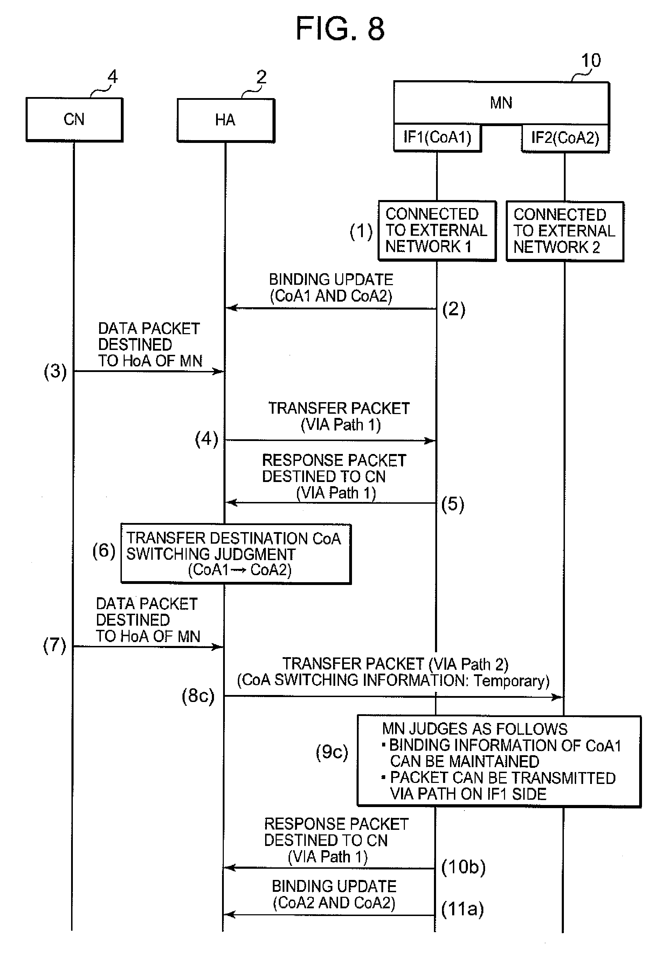

Fig. 8 shows communication sequence in case HA2 transmits Temporary information. The sequence (1) - (7) are the same as those shown in Fig. 6, and description will be given here on the subsequent sequences.
(8c) HA2 receives the packet from CN 4 and transmits it as a transfer packet destined to CoA2 of MN 10 via Path2. Also, Temporary information is transmitted as CoA switching information.
(9c) By this Temporary information, MN 10 can maintain the binding information of CoA1 before the switching. Also, it is judged that the packet can be transmitted via the interface 11a (IF1).
(10b) MN 10 receives the packet from HA2 and transmits it as a response packet destined to CN via Path1, and
(11a) MN 10 transmits binding update message in order to maintain binding information relating to both of CoA1 and CoA2.

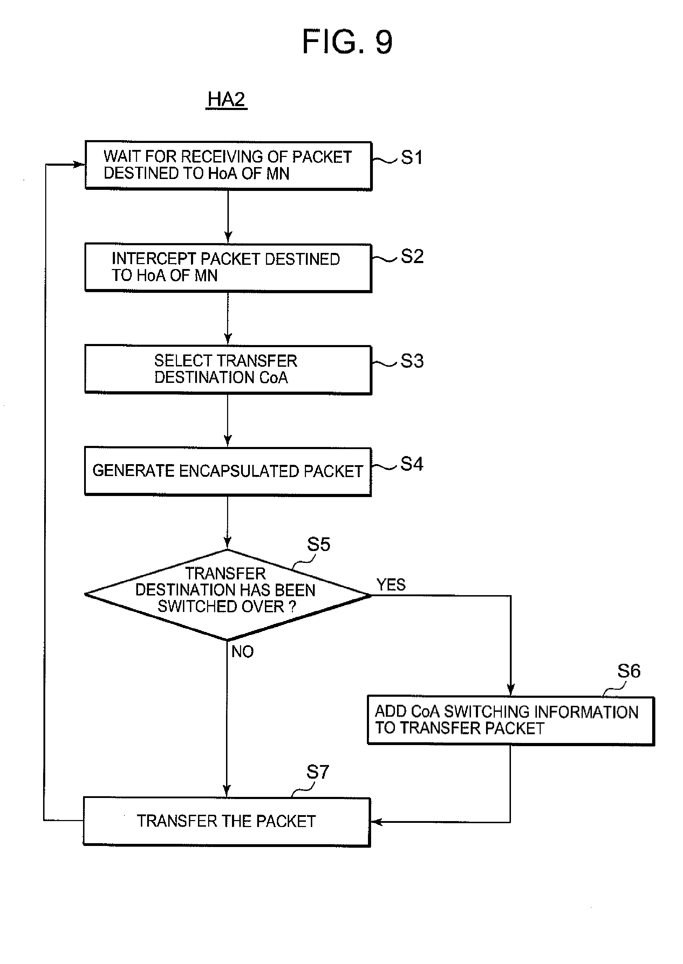

Fig. 9 is a flowchart to explain the processing of HA2. When the packet to HoA of MN 10 is intercepted (Step 2) under the condition to wait for the receiving of the packet to HoA of MN 10 (Step S1), CoA of the transfer destination is selected (Step S3). Then, the packet addressed to HoA of MN 10 is encapsulated with CoA of the transfer destination (Step S4), and it is checked whether the transfer destination CoA has been switched over or not (Step S5). If it is switched over, CoA switching information is added to the transferred packet (Step S6), and this packet is transferred (Step S7). On the other hand, if the transfer destination CoA is not switched over, it is transferred as it is (Step S7).

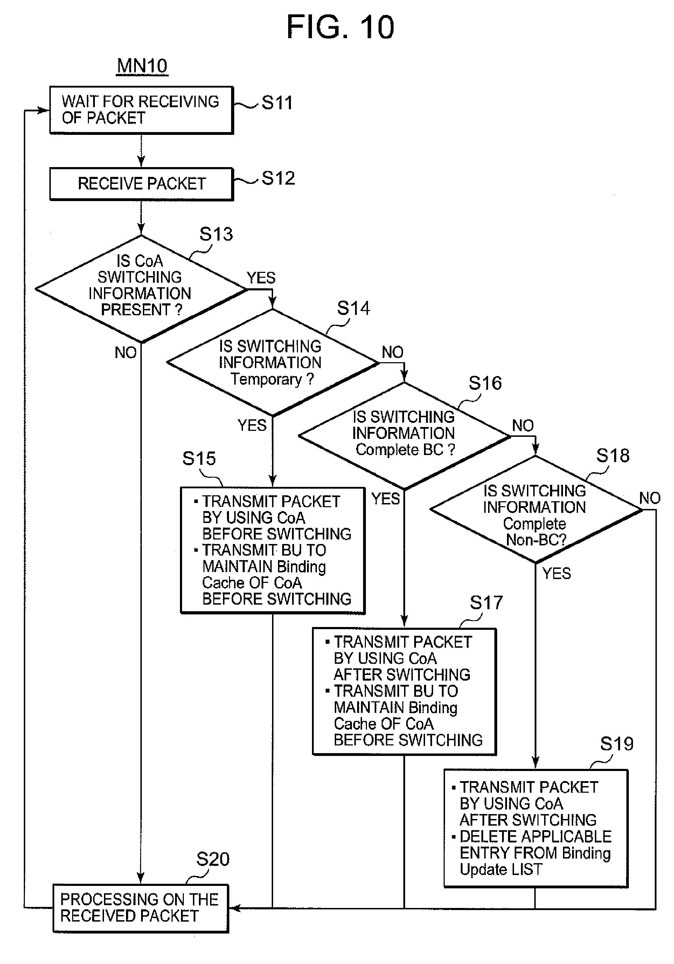

Fig. 10 is a flowchart to explain the processing of MN 10. First, when the packet is received (Step S12) under the condition to wait for the receiving of the packet (Step S11), it is checked whether there is CoA switching information in the received packet or not (Step S13). If CoA switching information is not present, it is advanced to Step S20, and the received packet is processed. On the other hand, in case CoA switching information is present in Step S13, the packet is transmitted by using the CoA before the switching if CoA switching information is temporary information, and BU is transmitted to maintain binding cache of the CoA before the switching (Steps S14 and S15), and it is advanced to Step S20. If CoA switching information is Complete BC information, the packet is transmitted by using the CoA after the switching, and BU is transmitted to maintain binding cache of the CoA before the switching (Steps S16 and S17), and it is advanced to Step S20. When CoA switching information is Complete Non-BC information, the packet is transmitted by using the CoA after the switching. Then, the entry is deleted from the binding update list (Steps S18 and S19), and it is advanced to Step S20.

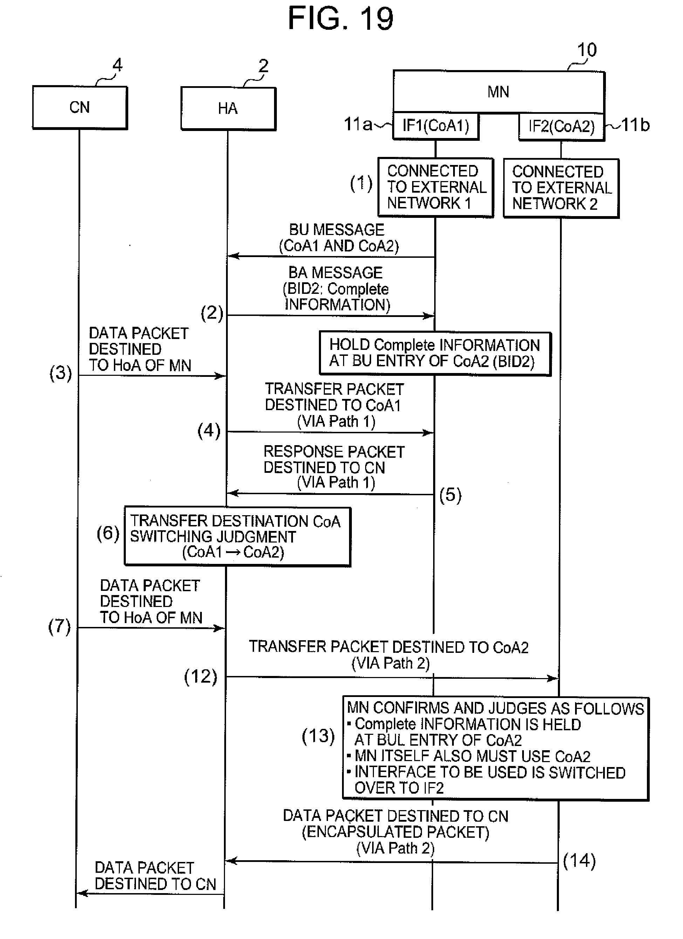

Fig. 19 shows the sequence when HA1 notifies Complete information to a specific CoA. The sequences (1) - (7) are basically the same as those shown in Fig. 6, and detailed description is not given here. Complete information is notified from HA2 to BID2. When the transfer destination is switched over from CoA1 to CoA2 by HA2 (12), MN 10 switches over the interface to transmit the packet to IF2 (13) because complete information is added to the BUL entry, which corresponds to CoA2 of the switching destination. As a result, the data packet (the encapsulated packet) destined to CN is transmitted via Path2 (14).

By the first embodiment of the invention, MN 10 can recognize that HA2 has switched over the transfer destination address and the path (and the reason for it) after the transfer destination address has been switched over by HA2. As a result, MN 10 can take necessary action to match the switching by HA2 (and the reason for it), and this makes it possible to prevent the transmission of unnecessary data packet/BU.

### [The second embodiment (notification by CN)]

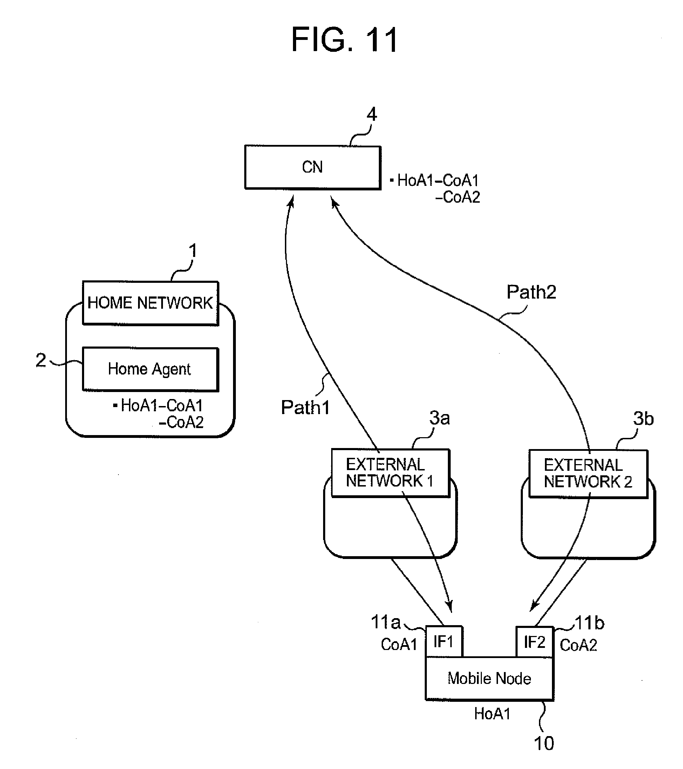

Fig. 11 is a drawing to show an arrangement of a network in a second embodiment of the invention. HA2 is present in a home network 1, and it controls HoA1 of MN 10. MN 10 has two interfaces: 11a (IF1) and 11b (IF2). IF1 is connected to an external network 3a, and CoA1 is held as an address to be used in the external network 3a. IF2 is connected to an external network 3b, and CoA2 is held as an address to be used in the external network 3b. CN 1 is a correspondent node of MN 10, and MN 10 registers binding information relating to CoA1 and CoA2. As a communication path between MN and CN, there are Path1 when CoA1 is used and Path2 when CoA2 is used. Path1 and Path2 do not pass through HA2 in the second embodiment.

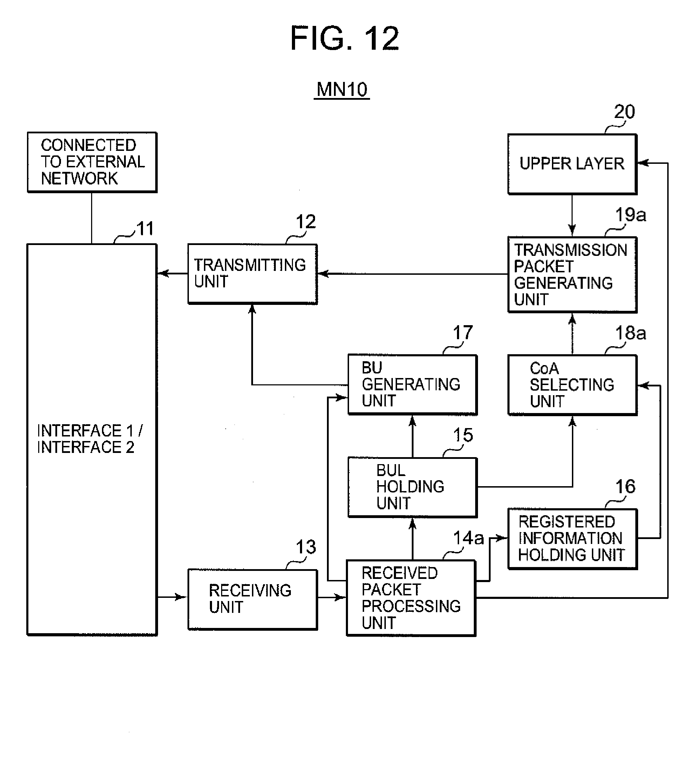

Fig. 12 is a block diagram to show an example of arrangement of MN 10 in the second embodiment of the invention. It is different from the first embodiment in the received packet processing unit 14a, the CoA selecting unit 18a and the transmission packet generating unit 19a. The received packet processing unit 14a performs the processing relating to the received packet, and it is checked whether CoA switching information is contained in the header of the packet or not. The difference from the received packet processing unit 14 of the first embodiment lies in that CoA switching information is acquired from CN 4 and not from HA2. The meaning of CoA switching information is the same as that of the first embodiment, and the action of MN 10 to match the information is also the same. When the data packet from CN 4 is received in encapsulated state by HA2, the received packet processing unit 14a checks whether there is the binding information registered in CN 4 or not by referring to the BUL holding unit 15. If the binding information has been already registered and the lifetime still remains, no instruction to transmit BU is given to the BU generating unit 17.

The CoA selecting unit 18a receives the instruction of the transmission packet generating unit 19a and selects CoA, which should be designated as a source address of the packet to be transmitted. The CoA selecting unit 18a refers to the information held by the BUL holding unit 15 and it is checked whether or not there is BUL, which corresponds to the destination address of the packet to be transmitted. If there is the corresponding BUL entry, CoA of the entry is selected, to which Complete BC information or Complete Non-BC information is not added among the CoAs registered to CN. Then, by using the CoA thus selected, notification is given to the transmission packet generating unit 19a that a packet added with a Routing Header should be generated.

Further, the CoA selecting unit 18a refers to the information held by the BUL holding unit 15 when a response packet to the packet transferred from CN 4 is transmitted. If Complete information is added to the BUL entry, which corresponds to the destination address of the received packet, the source address of the packet to be transmitted is switched over to CoA used by CN 4 (CoA, to which Complete information is added) even when CoA, which has been used for packet transmission before that is different from the CoA used by CN 4. If Complete information is not added to BUL, which corresponds to the destination address of the packet transmitted from CN 4, the CoA selecting unit 18a judges that the packet can be transmitted by using a CoA other than the CoA used by CN 4. As a result, when the transfer destination is switched over by CN 4, MN, which has received the packet where the CoA after the switching is set, continues to use the CoA, which has been used before the switching by CN 4 and prevents the transmission of the packet. When the packet is transmitted thereafter, it can be judged that the packet should be transmitted by using the same CoA as the CoA used by CN 4.

For instance, CN 4 adds Complete information to CoA2 in the BA message or the BRR message to be transmitted to MN 10, and transmits it to MN 10. Upon receipt of these messages, the received packet processing unit 14a gives an instruction to the BUL holding unit 15 that this Complete information should be held at the BUL entry of CoA2. In case the destination address of the packet transferred from CN 4 is CoA2 and Complete information is held at the BUL entry of CoA2, the CoA selecting unit 18 switches over the source address of the packet to be transmitted to CoA2 even when the CoA used by MN 10 before is the CoA other than CoA2 (CoA1). In this case, if Complete information is not added to BUL, which corresponds to the CoA as switched over by CN 4, the CoA selecting unit 18 judges that the packet can be transmitted by using a CoA other than the CoA used by CN 4.

The transmission packet generating unit 19a generates a packet to send the transmission data delivered from the upper layer 20 to the destination node. The transmission packet generating unit 19a gives an instruction to the CoA selecting unit 18a to select CoA to be used as the source address of the transmission packet. As a result, when the information notified from the CoA selecting unit 18a is to instruct the adding of Home Address Option, the address of CN is regarded as the destination address and the notified CoA as the source address, and a packet added with Home Address Option including HoA is generated.

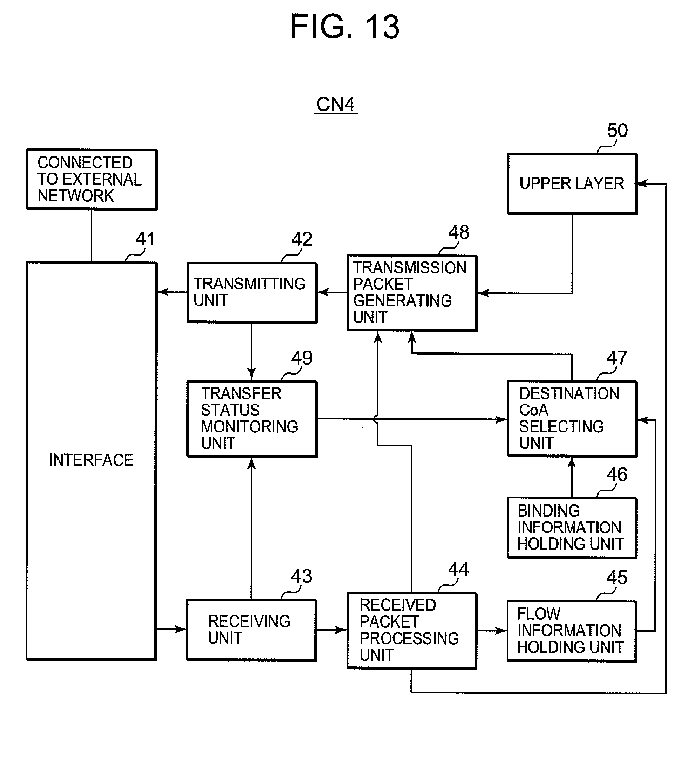

Fig. 13 is a block diagram to show an example of arrangement of CN 4 in the second embodiment of the invention. CN 4 comprises an interface 41, a transmitting unit 42, a receiving unit 43, a received packet processing unit 44, a flow information holding unit 45, a binding information holding unit 46, a destination CoA selecting unit 47, a transmission packet generating unit 48, a transfer status monitoring unit 49, and an upper layer 50. The received packet processing unit 44 performs the processing relating to the received packet via the interface 41 and the receiving unit 43. The received packet processing unit 44 delivers the packet to the upper layer 50 if the contents of the packet are to be processed by the upper layer 50 and delivers the packet (e.g. a message of the IP layer) to the transmission packet generating unit 48 if the packet is not necessary to be delivered to the upper layer, and if it is necessary to transmit the packet to that particular packet.

The flow information holding unit 45 plays a role to hold flow information registered by MN 10. It may be so designed that the binding information holding unit 46 holds the flow information. The binding information holding unit 46 holds the binding information containing CoA information as notified from MN 10. The destination CoA selecting unit 47 receives the instruction of the transmission packet generating unit 48. Then, by referring to the binding information holding unit 46, a Routing Header is added to the packet to be transmitted to MN 10, and it is judged whether it can be directly transmitted to MN 10 or not and selects CoA to be used as the destination address of the packet to be added with the Routing Header. The destination CoA selecting unit 47 refers to the information from the transfer status monitoring unit 49 and selects a CoA different from CoA, which has been used up to that moment. Then, it is judged that the transfer destination should be switched over, and the CoA switching information as described above is included, depending on the status of CoA after the switching. The destination CoA selecting unit 47 adds this CoA switching information as a Destination Option Header of the external header. Also, similarly to the case of the transfer destination CoA selecting unit 25 of HA2, the destination CoA selecting unit 47 notifies Complete information to a specific CoA before actual switching of the transfer destination as the information to request the switching of the interface to be used to MN 10 in synchronization with the switching of the transfer destination by CN 4.

The CoA switching information may be included in a BA (Binding Acknowledgement) message to be transmitted as a response to the BU message from MN 10 or a BRR (Binding Refresh Request) message. In this case, it may be included as a value of status field of the BA message or as a value of status field in the Binding Unique Identifier sub-option to be added to the BA message and the BRR message. Further, it may be included in the Flow Identification option to notify the flow information. As shown in Fig. 18, the Complete information is contained in the Binding Unique Identifier sub-option (BID; used as CoA identifying information) in the BA message or the BRR message. Also, it may be contained in the option to notify flow information (Flow Identification option). These messages can be transmitted before or after the switching of CoA. In case the BA message is transmitted only as a response to the BU message, the information to be notified has the meaning that the switching of all transfer destinations performed by CN 4 thereafter indicates the statuses of the CoA switching information as given above. In this case, when the switching of the transfer destination by CN 4 occurs, MN 10 judges whether it is appropriate or not to select its own source address or to transmit the BU message based on the CoA switching status information contained in the BA message as received in advance.

The reason for judging the switching of CoA may be as follows: In case the packet transfer to MN 10 and the packet transfer to the other MN may give influence on each other (e.g. in case another MN is present in the same link as MN 10 or in case it is present in the same network (domain network)), and when the transfer packets of these two pass through the same transfer route, judgment is made to switch over the transfer destination of MN 10, which has a plurality of transfer destinations, for the purpose of preventing the influence on the quality of communication. In particular, when it is wanted to avoid the influence by the packet transmitted from MN 10, it is possible to instruct the switching of the source address to be used by MN by notifying to MN that it is not a temporary transfer (i.e. Complete-BC). Further, in case it is no more necessary to maintain the binding information relating to the CoA before the switching because the switching of the transfer destination is permanent, it is possible to prevent that all packets to be transmitted from MN 10 are transmitted via the path before the switching by notifying Complete Non-BC, which notifies that the BU transmitted from MN 10 is not received to maintain the binding information. On the other hand, in case Complete information is notified in advance to a specific CoA, it is used in case where the same CoA as the CoA selected by HA2 itself is also used for MN 10.

The transmission packet generating unit 48 generates the packet to send the transmission data delivered from the upper layer 50 to the destination node. The transmission packet generating unit 48 gives an instruction to the destination CoA selecting unit 47 that it should be decided whether the Routing Header can be added to the packet to be transmitted or not and whether the packet can be directly transmitted to MN 10 or not, and further, that the CoA to be used as the destination address of the packet added with the Routing Header should be selected. As a result, in case the information as notified from the destination CoA selecting unit 47 is to instruct the adding of the Routing Header, a packet is generated, which has the notified CoA address as the destination address, and which is added with the Routing Header including HoA, and it should be delivered to the transmitting unit 42 to transmit it. On the other hand, in case the information as notified from the destination CoA selecting unit 47 is to instruct that nothing is to be added, the transmission packet generating unit 48 delivers the packet to the transmitting unit 42 as it is, and gives an instruction that the packet should be delivered to the transmitting unit 42 as it is and to transmit it. The transfer status monitoring unit 49 collects the information relating to the packet transferred to MN 10 under the control of HA2 and provides useful information, which can be used when the transfer destination CoA selecting unit 47 selects CoA. The upper layer 50 contains a transport layer or an application layer, which is present at an upper position than the IP layer.

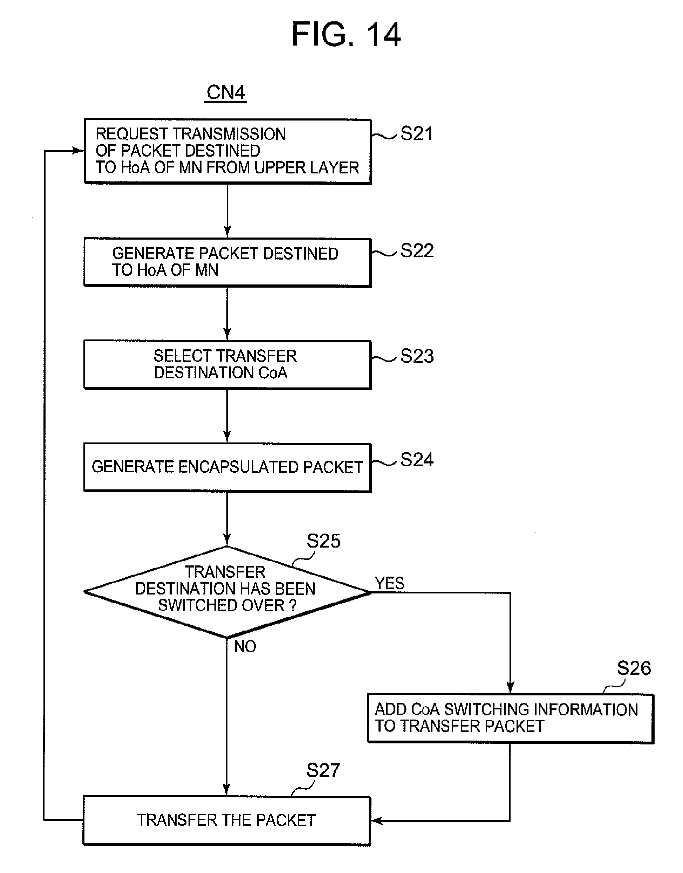

Fig. 14 shows operation of CN 4 in the second embodiment. When a request to transmit the packet addressed to HoA of MN 10 is given (Step S21) from the upper layer 50, a packet destined to HoA of MN 10 is generated (Step S22). Then, a transfer destination CoA is selected (Step S23). Further, similarly to the case shown in Fig. 9, the packet destined to HoA of MN 10 is changed to the packet destined to the transfer destination CoA. Then, a packet added with the Routing Header is generated (Step S24). Next, it is checked whether the transfer destination CoA has been switched over or not (Step S25). In case it has been switched over, CoA switching information is added to the transfer packet (Step S26), and the packet is transferred (Step S27). On the other hand, in case the transfer destination CoA has not been switched over, it is transferred as it is (Step S27). The processing of MN 10 in the second embodiment is the same as that of the first embodiment (Fig. 10).

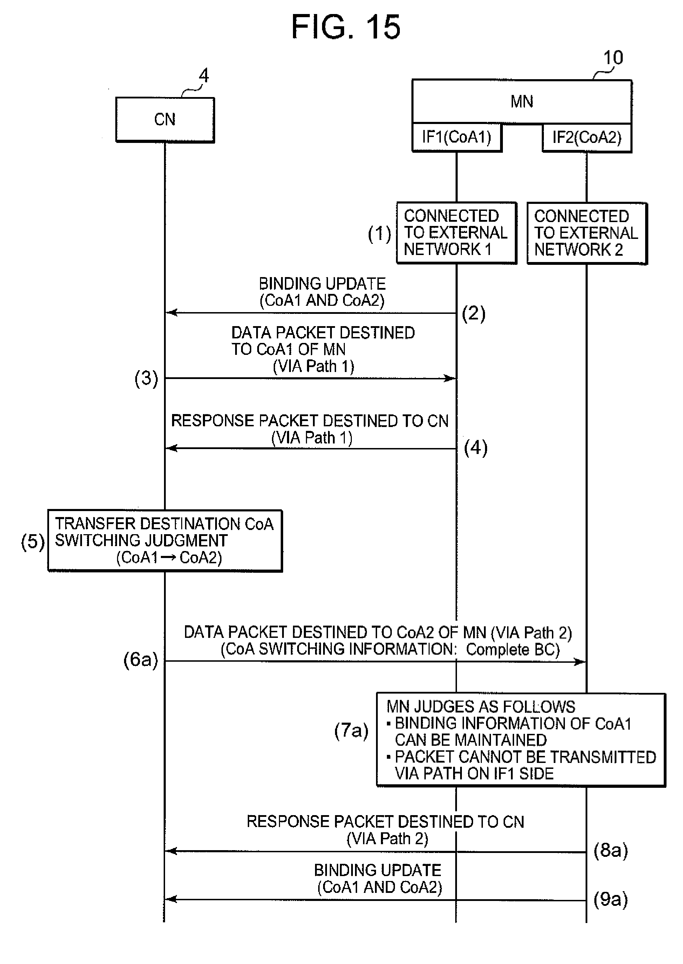

Fig. 15 shows communication sequence when CN 4 transmits Complete BC information. First,
(1) It is assumed that MN 10 is connected to an external network 3a (external network 1) via an interface 11a among two interfaces 11a (IF1) and 11b (IF2) (Path1 using CoA1). CoA1 and CoA2 are assigned to the interfaces 11a and 11b respectively.
(2) MN 10 transmits a binding update message in order to maintain binding information relating to CoA1 and CoA2.
(3) When CN 4 transmits a packet destined to CoA1 of MN 10 via Path1,
(4) MN 10 receives this packet and transmits it as a response packet to CN via Path1.

(5) CN 4 judges whether it is appropriate or not to switch over CoA of transfer destination based its own path selecting policy. It is supposed here that the transfer destination CoA of MN 10 has been switched over from CoA1 to CoA2.
(6a) CN 4 transmits the transfer packet destined to CoA2 of MN 10 via Path2, and Complete BC information is transmitted as CoA switching information.
(7a) Based on this Complete BC information, MN 10 can maintain binding information of CoA1 before the switching, but it is judged that the packet cannot be transmitted via the interface 11a (IF1).
(8a) MN 10 receives the packet from CN 4 and transmits it as a response packet to CN via Path2, and
(9a) MN 10 transmits a binding update message to CN 4 in order to maintain the binding information relating to both of CoA1 and CoA2.

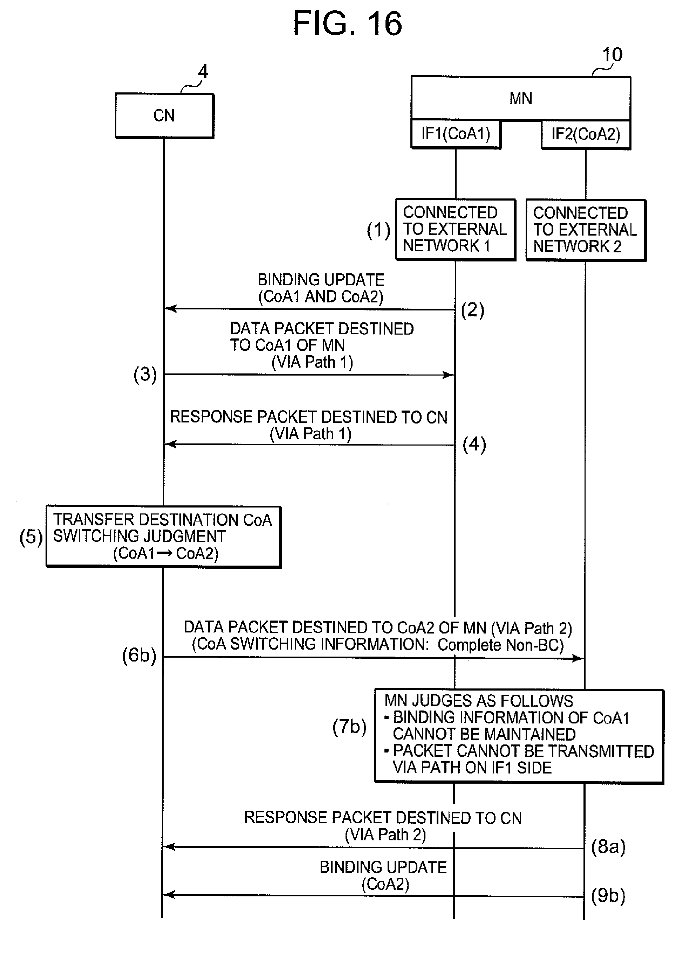

Fig. 16 shows communication sequence when CN 4 transmits Complete Non-BC information. Because the sequences (1) - (5) are the same as those shown in Fig. 15, detailed description is not given here, and description will be given below on the subsequent sequences.
(6b) CN 4 transmits the transfer packet destined to CoA of MN 10 to Path2 and also transmits Complete Non-BC information as CoA switching information.
(7b) Based on the Complete Non-BC information, MN 10 judges that the binding information of CoA1 before the switching cannot be maintained, and that the packet cannot be transmitted via the interface 11a (IF1).
(8a) MN 10 receives the packet from CN 4 and transmits it as a response packet destined to CN to Path2, and
(9b) MN 10 transmits only the binding update message in order to maintain the binding information relating to CoA2 after the switching.

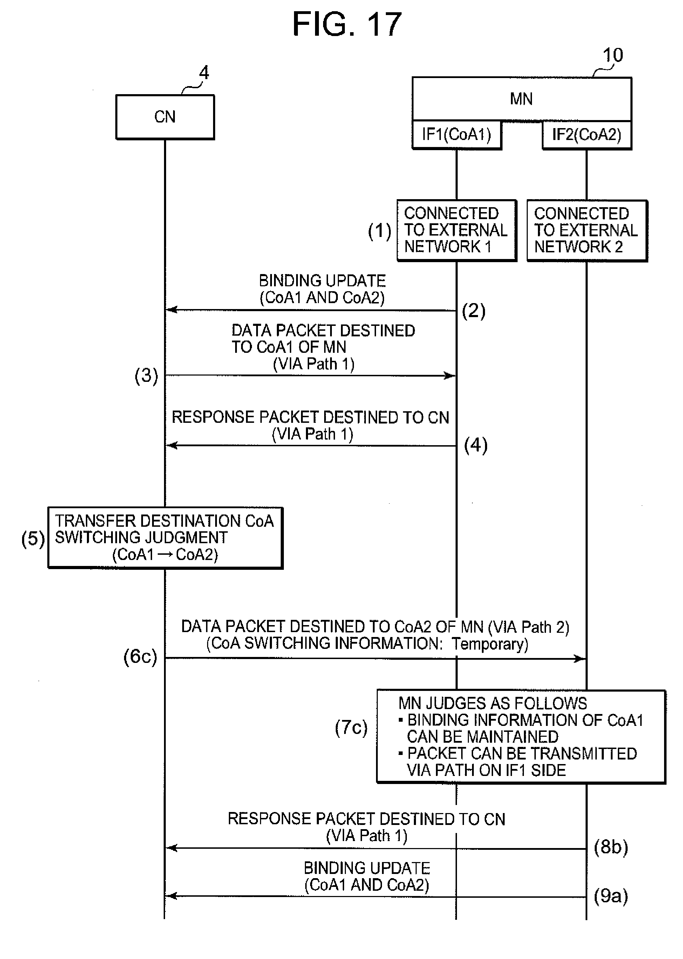

Fig. 17 shows communication sequence when CN 4 transmits Temporary information. The sequences (1) - (5) are the same as those shown in Fig. 15, and detailed description is not given here. Description will be given below on the subsequent sequences.
(6c) CN 4 transmits the transfer packet destined to CoA2 of MN 10 to Path2 and also transmits Temporary information as CoA switching information.
(7c) Based on this Temporary information, MN 10 can maintain binding information of CoA1 before the switching and judges that the packet can be transmitted via the interface 11a (IF1).
(8b) MN 10 receives the packet from CN 4 and transmits it as a response packet to CN via Path1, and
(9a) MN 10 transmits a binding update message to CN 4 in order to maintain binding information relating to both of CoA1 and CoA2.

Although not shown in the figure, similarly to HA2 in the figure (Complete information sequence), when CN 4 notifies Complete information to a specific CoA, Complete information is notified from CN 4 to BID2. Then, in case the transfer destination is switched over from CoA1 to CoA2 by CN 4, the interface to transmit the packet is switched over to IF2 because Complete information is added to the BUL entry to match CoA2 of the switching destination.

By the second embodiment of the invention, MN 10 can recognize that CN 4 has switched over the transfer destination address and the path (and further, the reason for it) after the transfer destination address has been switched over by CN 4. As a result, MN 10 can take an action to match the switching (and further, the reason for it) by CN 4, and the transmission of unnecessary data packet/BU can be prevented.

Each functional block used in the description of the embodiments as given above can be realized as LSI, typically represented by the integrated circuit. These may be produced as one chip individually or may be designed as one chip to include a part or all. Here, it is referred as LSI, while it may be called IC, system LSI, super LSI, or ultra LSI, depending on the degree of integration. Also, the technique of integrated circuit is not limited only to LSI and it may be realized as a dedicated circuit or a general-purpose processor. FPGA (Field Programmable Gate Array), which can be programmed after the manufacture of LSI, or a reconfigurable processor, in which connection or setting of circuit cell inside LSI can be reconfigured, may be used. Further, with the progress of semiconductor technique or other techniques derived from it, when the technique of circuit integration to replace LSI may emerge, the functional blocks may be integrated by using such technique. For example, the adaptation of bio-technology is one of such possibilities.

### INDUSTRIAL APPLICABILITY

The present invention provides such effects that, when a path is switched over according to the path selecting policy of a home agent itself or a correspondent node itself, the occurrence of unnecessary traffic from the mobile node can be prevented, and this technique can be used for the purpose such as monami6.

## Claims

1. A communication method, in which a mobile node registers a plurality of care-of addresses at a home agent which controls home address of said mobile node, and said home agent transfers a packet destined to said home address to one of said plurality of care-of addresses, wherein said method comprises:
a step where said home agent switches over said care-of address of transfer destination and notifies care-of address switching information containing the care-of address before the switching to said mobile node by a packet destined to the care-of address after the switching; and
a step where said mobile node transmits a binding update message to said home agent to maintain binding information relating to the care-of address after the switching.

2. The communication method according to claim 1, wherein:
said care-of address switching information further contains at least one of information to indicate whether binding information relating to the care-of address before said switching can be maintained or not and information to indicate whether a packet can be transmitted via an interface corresponding to the care-of address before said switching; and
said method further comprises a step where said mobile node transmits a binding update message to said home agent based on the information to indicate whether the binding information relating to the care-of address before said switching can be maintained or not, and said mobile node also transmits a packet to said home agent via an interface based on the information to indicate whether the packet can be transmitted via the interface corresponding to the care-of address before said switching or not.

3. A communication system, in which a mobile node registers a plurality of care-of addresses at a home agent which controls home address of said mobile node, and said home agent transfers a packet destined to said home address to one of said plurality of care-of addresses, wherein the system comprises:
means for switching over said care-of address of transfer destination by said home agent, and notifying care-of address switching information containing the care-of address after the switching to said mobile node by said home agent; and
means for transmitting a binding update message for maintaining binding information relating to the care-of address after said switching to said home agent by said mobile node.

4. The communication system according to claim 3, wherein:
said care-of address switching information further contains at least one of information to indicate whether binding information relating to the care-of address before said switching can be maintained or not and information to indicate whether a packet can be transmitted via an interface corresponding to the care-of address before said switching; and
said mobile node transmits a binding update message to said home agent based on the information to indicate whether binding information relating to the care-of address before said switching can be maintained or not, and also transmits a packet to said home agent via an interface based on the information to indicate whether the packet can be transmitted via the interface corresponding to the care-of address before said switching or not.

5. A home agent in a communication system, in which a mobile node registers a plurality of care-of addresses at a home agent which controls home address of said mobile node, and said home agent transfers a packet destined to said home address to one of said plurality of care-of addresses, wherein said home agent comprises:
means for switching over said care-of address of transfer destination, and notifying care-of address switching information containing the care-of address after the switching; and
wherein said mobile node transmits a binding update message for maintaining binding information relating to the care-of address after said switching to said home agent itself.

6. The home agent according to claim 5, wherein:
said care-of address switching information further contains at least one of information to indicate whether binding information relating to the care-of address before said switching can be maintained or not and information to indicate whether a packet can be transmitted via an interface corresponding to the care-of address before said switching; and
said mobile node transmits a binding update message to itself based on the information to indicate whether binding information relating to the care-of address before said switching can be maintained or not, and also transmits a packet to said home agent via an interface based on the information to indicate whether the packet can be transmitted via the interface corresponding to the care-of address before said switching or not.

7. A mobile node in a communication system, in which a mobile node registers a plurality of care-of addresses at a home agent which controls home address of said mobile node, and said home agent transfers a packet destined to said home address to one of said plurality of care-of addresses, wherein said mobile node comprises:
means for, when said home agent switches over said care-of address of transfer destination and notifies care-of address switching information containing the care-of address before the switching to said mobile node itself, transmitting a packet destined to the care-of address after the switching, and transmitting a binding update message for maintaining binding information relating to the care-of address after said switching to said home agent.

8. The mobile node according to claim 7, wherein:
when said care-of address switching information further contains at least one of information to indicate whether binding information relating to the care-of address before said switching can be maintained or not and information to indicate whether a packet can be transmitted via an interface to correspond to the care-of address before said switching, said mobile node transmits to said home agent a binding update message based on the information to indicate whether binding information relating to the care-of address before said switching can be maintained or not, and also transmits a packet via the interface based on the information to indicate whether the packet can be transmitted to said home agent or not via the interface corresponding to the care-of address before said switching.

9. A communication method, in which a mobile node registers a plurality of care-of addresses at a correspondent node, and said correspondent node transfers a packet to one of said plurality of care-of addresses, wherein said method comprises:
a step where said correspondent node switches over said care-of address of transfer destination and notifies care-of address switching information containing the care-of address before the switching of said mobile node by a packet destined to the care-of address after the switching; and
a step where said mobile node transmits a binding update message for maintaining binding information relating to the care-of address after said switching to said correspondent node.

10. The communication method according to claim 9, wherein:
said care-of address switching information further contains at least one of information to indicate whether binding information relating to the care-of address before said switching can be maintained or not and information to indicate whether a packet can be transmitted via an interface corresponding to the care-of address before said switching; and
said method further comprises a step where said mobile node transmits a binding update message to said correspondent node based on the information to indicate whether binding information relating to the care-of address before said switching can be maintained or not, and also transmits a packet to said correspondent node via an interface based on the information to indicate whether the packet can be transmitted via the interface corresponding to the care-of address before said switching or not.

11. A communication system, in which a mobile node registers a plurality of care-of addresses at a correspondent node, and said correspondent node transfers a packet to one of said plurality of care-of addresses, wherein said system comprises:
means for switching over said care-of address of transfer destination by said correspondent node, and notifying care-of address switching information containing the care-of address before the switching of said mobile node by a packet destined to the care-of address after the switching to said mobile node by said correspondent node; and
means for transmitting a binding update message for maintaining binding information relating to the care-of address after said switching to said correspondent node by said mobile node.

12. The communication system according to claim 11, wherein:
said care-of address switching information further contains at least one of information to indicate whether binding information relating to the care-of address before said switching can be maintained or not and information to indicate whether a packet can be transmitted via an interface corresponding to the care-of address before said switching; and
said mobile node transmits a binding update message to said correspondent node based on the information to indicate whether binding information relating to the care-of address before said switching can be maintained or not, and also transmits a packet to said correspondent node via an interface based on the information to indicate whether the packet can be transmitted via the interface corresponding to the care-of address before said switching or not.

13. A communication node in a communication system where a mobile node registers a plurality of care-of addresses at a correspondent node, and said correspondent node transfers a packet to one of said plurality of care-of addresses, wherein said correspondent node comprises:
means for switching over said care-off address of transfer destination and for notifying care-of address switching information containing the care-of address before the switching to said mobile node by a packet destined to the care-of address after the switching; and
wherein said mobile node is so arranged that a binding update message for maintaining binding information relating to the care-of address after said switching is transmitted to said mobile node itself.

14. The communication node according to claim 13, wherein:
said care-of address switching information further contains at least one of information to indicate whether binding information relating to the care-off address before said switching can be maintained or not and information to indicate whether a packet can be transmitted or not via an interface to correspond to the care-of address before said switching; and
said mobile node transmits a binding update message based on the information to indicate whether binding information relating to the care-of address before said switching can be maintained or not to said correspondent node, and transmits a packet to said correspondent node itself via an interface based on the information to indicate whether a packet can be transmitted or not via the interface to correspond to the care-of address before said switching.

15. A mobile node in a communication system, in which a mobile node registers a plurality of care-of addresses at a correspondent node and said correspondent node transfers a packet to one of said plurality of care-of addresses, said mobile node comprises:
means for, when said correspondent node switches over said care-of address of transfer destination and notifies the care-of address switching information containing the care-of address before the switching to said mobile node by a packet destined to the care-of address after the switching, transmitting a binding update message for maintaining binding information relating to the care-of address after said switching to said correspondent node.

16. The mobile node according to claim 15, wherein:
when said care-of address switching information further contains at least one of information to indicate whether binding information relating to the care-of address before said switching can be maintained or not and information to indicate whether a packet can be transmitted via an interface to correspond to the care-of address before said switching, a binding update message based on the information to indicate whether binding information relating to the care-of address before said switching can be maintained or not is transmitted to said correspondent node, and a packet is transmitted to said correspondent node via the interface based on the information to indicate whether the packet can be transmitted via the interface to correspond to the care-of address before said switching.
